Europäisches Patentamt

(19) European Patent Office

Office européen des brevets

(11) EP 0 558 519 B1

## (12) FASCICULE DE BREVET EUROPEEN

(45) Date de publication et mention
de la délivrance du brevet:
**10.07.1996 Bulletin 1996/28**

(21) Numéro de dépôt: **91919249.2**

(22) Date de dépôt: **03.10.1991**

(51) Int. Cl.⁶: **B01D 33/073**

(86) Numéro de dépôt international:
**PCT/FR91/00775**

(87) Numéro de publication internationale:
**WO 92/06765 (30.04.1992 Gazette 1992/10)**

(54) **PROCEDE DE SEPARATION DE CONSTITUANTS SOLIDES D'UNE SUSPENSION ET DISPOSITIF DE MISE EN UVRE DU PROCEDE**

VERFAHREN ZUR ABTRENNUNG VON FESTSTOFFEN AUS EINER SUSPENSION UND ANLAGE ZUR DURCHFÜHRUNG DES VERFAHRENS

PROCESS FOR SEPARATING THE SOLID CONSTITUENTS OF A SUSPENSION AND DEVICE FOR CARRYING OUT SAID PROCESS

(84) Etats contractants désignés:
**DE FR GB NL**

(30) Priorité: **18.10.1990 FR 9013148**

(43) Date de publication de la demande:
**08.09.1993 Bulletin 1993/36**

(73) Titulaires:
• **KODAK-PATHE**
**F-75594 Paris Cedex 12 (FR)**
Etats contractants désignés:
**FR**

• **EASTMAN KODAK COMPANY**
**Rochester, New York 14650-2201 (US)**
Etats contractants désignés:
**DE GB NL**

(72) Inventeur: **MIGNOT, André**
**F-71102 Chalon-sur-Saone Cédex (FR)**

(74) Mandataire: **Parent, Yves et al**
**Kodak-Pathé**
**Département Brevets et Licences**
**CRT 60/1 -Zone Industrielle**
**71102 Chalon-sur-Saône Cédex (FR)**

(56) Documents cités:
**WO-A-90/07968**

## Description

L'invention concerne un procédé de séparation de constituants solides de tailles différentes contenus dans une suspension. Le procédé selon la présente invention peut également être utilisé pour réaliser un lavage de telles suspensions.

Jusqu'à présent, une technique couramment utilisée pour réaliser la séparation de constituants solides contenus dans une suspension consiste à utiliser un filtre rotatif à l'intérieur duquel on introduit la solution à filtrer ; le filtre est entraîné en rotation de telle sorte qu'en raison des forces centrifuges s'exerçant sur les particules, celles dont la taille est inférieure au diamètre des pores du filtre passent au travers du filtre rotatif. Les particules qui passent au travers du filtre sont alors récupérées dans une enceinte stationnaire entourant ledit filtre rotatif. Ainsi, le brevet GB 2 178 332 décrit un cyclindre rotatif filtrant permettant de filtrer une quantité donnée de sable. Selon ce brevet, il est prévu un dispositif permettant de pulvériser sur la surface du cylindre'rotatif un fluide de lavage permettant de nettoyer le filtre après un certain nombre d'utilisations dudit filtre. L'inconvénient de tels dispositifs résulte, en effet, dans le fait qu'ils génèrent un colmatage assez rapide de la surface filtrante.

Dans les années 70 on a vu apparaître le concept de filtration à courant transversal. Le principe consistait à diriger la suspension parallèlement au filtre. Cette technique permettait d'augmenter la vitesse de filtration en minimisant l'épaisseur des couches de polarisation près de la surface de filtration, dépendant de la différence de pression entre la partie interne de la surface de filtration et la partie externe de ladite surface. Cette technologie présentait cependant l'inconvénient de fournir un débit de filtration décroissant avec le temps en raison du même problème de colmatage de la surface filtrante.

Pour résoudre ce problème, on a suggéré d'entraîner la surface filtrante en rotation de façon à supprimer les problèmes de colmatage et à permettre une augmentation du débit de filtration de tels dispositifs de filtration, les forces centrifuges résultant de la rotation du filtre empêchant en effet le dépôt de particules dont la taille est supérieure à la taille des pores de la surface filtrante. De tels dispositifs ont permis, par rapport aux dispositifs stationnaires, de multiplier le débit de filtration par six.

De tels dispositifs ne permettent cependant pas de séparation sélective de particules de différentes tailles comme il pourrait être souhaitable en présence d'une supension comprenant une pluralité de populations de particules de tailles différentes afin de pouvoir par exemple isoler tel ou tel type de particules. Jusqu'à présent de telles opérations nécessitent en effet de changer la surface de filtration ce qui est souvent complexe et pénalisant du point de vue économique.

A titre d'exemple, un tel dispositif est décrit dans le brevet FR 1 207 441 ; selon ce brevet, le dispositif de filtration comporte une enceinte fixe étanche dans laquelle est admis le fluide à filtrer et une surface filtrante intérieure animée d'un mouvement de rotation, l'ensemble filtrant étant animé d'un mouvement de rotation continu ou intermittent et comportant un média filtrant plissé, ondulé ou gaufré afin d'en augmenter la surface de filtration.

Aussi, est ce un des objets de la présente invention que de fournir un procédé de filtration du type à décolmatage par centrifugation dont le seuil de coupure du filtre peut être modifié sans changer la surface de filtration.

C'est un autre objet de la présente invention que de pouvoir, pour une suspension présentant une courbe de distribution granulométrique donnée, isoler un intervalle particulier de tailles de particules situé n'importe où dans la courbe de distribution.

C'est encore un autre objet de la présente invention que de pouvoir fournir un procédé adapté pour le lavage de suspensions telles que des émulsions photographiques.

C'est encore un autre objet que de fournir un procédé permettant, dans une suspension telle qu'une émulsion photographique, de pouvoir séparer des particules entre elles en fonction de leur forme.

D'autres objets de la présente invention apparaîtront au cours de description détaillée qui suit.

Selon la présente invention, on réalise un procédé de séparation de constituants solides de tailles et/ou de formes différentes, contenus dans une suspension au moyen d'un dispositif comportant un cylindre filtrant creux dont la paroi est constituée d'un matériau poreux, la pression interne duit cylindre étant $P_i$ et, une enceinte cylindrique stationnaire entourant ledit cylindre creux et disposée de manière à ce que les parois de ladite enceinte cylindrique définissent avec ledit cylindre filtrant une zone de circulation à l'intérieur de laquelle la pression est $P_e > P_i$, ledit procédé comprenant les étapes suivantes :

1) entraîner en rotation continue ledit cylindre filtrant creux ;

2) faire circuler la suspension sur la partie externe de la paroi du cylindre filtrant, jusqu'à ce que l'on ait atteint le niveau de séparation souhaité, ladite enceinte stationnaire comportant deux orifices, un premier orifice permettant l'introduction de la suspension à filtrer, un second permettant l'évacuation du volume non filtré avant d'être recyclé par ledit premier orifice ;

3) évacuer le produit de filtration de la zone interne du cylindre filtrant par l'intermédiaire d'un orifice approprié ;

ledit procédé étant caractérisé en ce que, au cours du processus de séparation, on modifie la surface efficace des pores dudit cylindre en modifiant la vitesse de rotation dudit cylindre filtrant, et en ce que ladite vitesse de rotation du cylindre filtrant, les pressions respectives $P_e$ et $P_i$, ainsi que les rayons respectifs du cylindre et de l'enceinte cylindrique stationnaire sont ajustés de manière à ce que la suspension forme sur la partie externe de la paroi du cylindre filtrant, un écoulement sous forme de cellules de Taylor.

La description plus détaillée qui suit sera faite en faisant référence aux dessins dans lesquels :

- la Fig. 1 représente un dispositif de filtration utilisé pour la mise en oeuvre du procédé selon la présente invention ;
- la Fig. 2A - 2F sont des graphiques illustrant les étapes d'un procédé de séparation selon la présente invention, appliqué à une émulsion photographique ;
- les Fig. 3A - 3C sont des graphiques illustrant les étapes d'un autre exemple de séparation selon la présente invention.

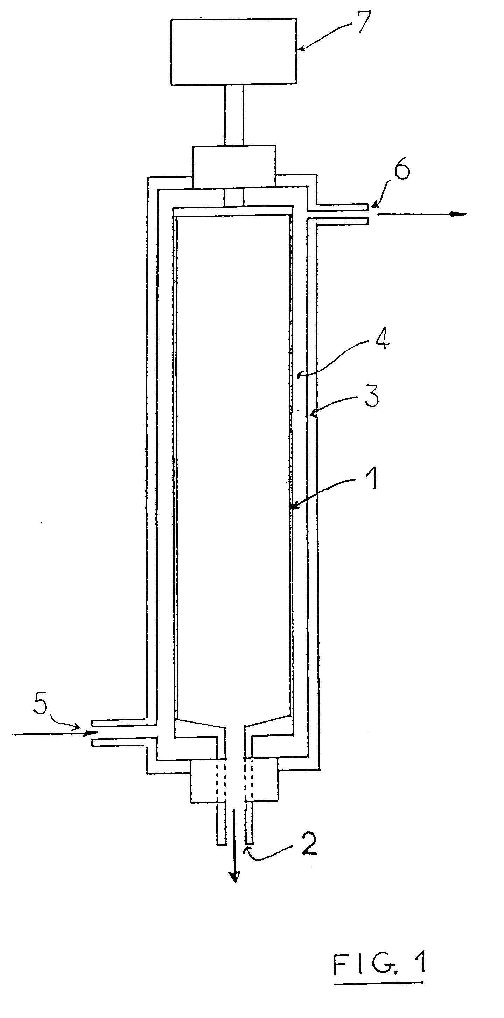

La Fig. 1, à laquelle il est maintenant fait référence illustre de façon schématique un mode de réalisation du filtre rotatif utilisé selon la présente invention. Il comporte principalement un cylindre filtrant rotatif creux (1) dont la paroi est constituée d'un matériau poreux. Selon un mode de réalisation cette paroi filtrante est constituée d'un métal fritté tel qu'un acier fritté inoxydable. La taille des pores formant la surface filtrante est choisie en fonction de la taille des particules entrant dans la composition de la suspension à filtrer. De préférence, afin d'empêcher le colmatage de la surface de filtration, la taille des pores est au moins supérieure à la taille de la plus grosse particule présente dans la suspension. Le cylindre rotatif comporte à l'une des ses extrémités un orifice de sortie (2) permettant l'évacuation du produit de filtration ou "filtrat". Selon le mode de réalisation représenté en Fig. 1, la taille de l'orifice de sortie du filtrat est inférieure au diamètre du cylindre rotatif. Selon un autre mode de réalisation le diamètre de l'orifice de sortie est au moins égal au diamètre du cylindre, des moyens appropriés étant alors prévus pour collecter le filtrat. Le dispositif comporte également une enceinte cylindrique stationnaire (3) entourant ledit cylindre rotatif (1). Ladite enceinte stationnaire est disposée de manière à ce que ses parois définissent avec le cylindre rotatif un espace (4) suffisant pour permettre la circulation de la suspension à filtrer sur la partie externe de la paroi filtrante dudit cylindre rotatif jusqu'à ce que l'on ait atteint le niveau de séparation souhaité. La largeur de cet espace (4) est, de préférence comprise entre 1 mm et 50 mm et de préférence est de l'ordre de 5 mm. Cette enceinte stationnaire comporte deux orifices, un premier orifice (5) permettant l'introduction de la suspension à filtrer, un second (6) permettant l'évacuation du volume non filtré avant d'être recyclé par ledit premier orifice (5). Le cylindre rotatif est entraîné en rotation au moyen d'un moteur à vitesse variable (7). Ainsi qu'il sera expliqué plus en détail par la suite, le fait de modifier la vitesse d'entraînement du cylindre rotatif permet de modifier substantiellement "la surface efficace" des pores dudit cylindre permettant ainsi d'ajuster le seuil de coupure du filtre sans modifier la surface de filtration. En réalité, une même surface de filtration présentera, suivant la vitesse à laquelle elle est entraînée, un" seuil de coupure" différent, la variation de vitesse modifiant, comme il sera expliqué plus en détail par la suite, la surface virtuelle des pores. La pression $P_i$ a l'intérieur du cylindre rotatif (1) est inférieure à la pression $P_e$ existant entre le cylindre rotatif et l'enceinte stationnaire. En réalité le pouvoir de séparation du filtre dépend essentiellement de trois paramètres liés entre eux : le seuil de coupure du filtre (donné par le fabricant et qui correspond en statique à la taille des plus petites particules arrêtées par le filtre), la vitesse de rotation du filtre, et la différence de pression $P_e - P_i$. A la place de la vitesse, il serait plus exact de parler d'accélération puisque en effet la force centrifuge varie en fonction du rayon du filtre et du carré de la vitesse. Dans le mode de réalisation décrit dans la présente demande, le rayon du filtre est de 25 mm. Ainsi, plus le seuil de coupure est faible, plus la différence de pression $P_e$-$P_i$ doit être élevée. De même, plus la vitesse est élevée, plus la différence de pression doit être grande. A titre d'exemple, si le filtre rotatif est à la pression atmosphérique, la différence de pression $P_e$-$P_i$ peut varier entre $10^3$ Pa et $10^6$ Pa, pour un seuil de coupure de 8 $\mu$m et une vitesse de rotation variant entre 0 et 10 000 tr/mn. Dans les exemples réalisés par la suite la différence de pression est d'environ $4.10^4$ Pa.

Avec une telle configuration, si la vitesse de rotation est suffisamment élevée, le flux laminaire sous forme de feuilles cylindriques est remplacé par un flux laminaire d'une nature quelque peu différente, caractérisé par une séquence alternée, régulière de tourbillons toroïdaux à rotation antagoniste, connus sous le nom de cellules de Taylor. A condition que la vitesse du cylindre rotatif soit inférieure à une vitesse limite donnée, les cellules de Taylor gardent leur nature laminaire individuelle à l'intérieur de l'espace cylindre rotatif/enceinte stationnaire sur toute la longueur axiale dudit cylindre rotatif. En outre, il existe une zone frontière de fluide laminaire située à côté de la surface filtrante qui, en raison de la combinaison des actions de cisaillement laminaire ne présente sensiblement aucune cellule de Taylor. Un nombre sans dimension, analogue au nombre de Reynolds a été défini pour caractériser ce flux et est appelé communément nombre de Taylor. Si $r_1$ et $r_2$ sont les rayons respectifs du cylindre rotatif et de l'enceinte stationnaire, et $\Omega$ la vitesse angulaire dudit cylindre, le nombre de Taylor est donné par la formule :

$$Ta = \frac{\Omega.rho.r_1(r_2 - r_1)}{\mu}.\left[\frac{2(r_2 - r_1)}{(r_1 + r_2)}\right]^{1/2}$$

où rho est la densité et $\mu$ la viscosité.

Selon la définition classique d'un flux laminaire, un flux de Taylor, pour un nombre de Taylor compris dans un intervalle donné (généralement entre 40 et 4000) peut être considéré comme laminaire.

En cours d'utilisation la suspension est introduite dans l'espace (4) cylindre rotatif/enceinte stationnaire et circule le long et parallèlement à la surface de filtration (1). Le mouvement relatif de rotation des deux surfaces génère trois flux agissant ensembles sur la suspension : l'effet principal de cisaillement provoqué par la surface de filtration en rotation, le flux des cellules de Taylor, et le flux axial de la suspension dans l'appareil.

Nous allons maintenant considérer l'aspect hydrodynamique du problème.

On utilise un dispositif du type de celui décrit en faisant référence à la Fig. 1 dans lequel le rayon du cylindre rotatif (1) est $r_1$ et sa vitesse angulaire $\omega$. Considérons deux éléments volumiques $V_1$ (un élément volumique liquide, de densité $d_1$, de surface $S_1$ ; sa masse est $M_1 = v_1 . d_1$) et $v_s$ (élément volumique solide de densité $d_s$, de surface $s_s$ ; sa masse est $M_s = v_s d_s$. Supposons que l'on ait $v_1 = v_s$ ; $s_1 = s_s$ ; $d_s > d_1$. On a alors $M_s > M_1$.

La pression à l'intérieur du filtre rotatif est $P_i$ ; celle dans l'espace filtre rotatif/enceinte stationnaire est $P_e$ avec $P_e > P_i$.

Les éléments volumiques liquides et solides sont soumis à des forces opposées : une force centrifuge et une force de pression.

La force de pression :

$$F_p = (P_e - P_i)s_s = (P_e - P_i)s_1$$

Cette force tend à rapprocher les particules de la surface filtrante.

Les forces centrifuges :

$$. \quad F_1 = M_1 \omega^2 r$$

$$. \quad F_s = M_s \omega^2 r$$

Ces forces éloignent les particules et/ou le liquide de la surface filtrante.

Puisque $M_s > M_1$, on a $F_s > F_1$

Trois cas doivent maintenant être envisagés :

<u>1er cas</u> : $F_p > F_s > F_1$
Si le diamètre des pores de la surface filtrante est supérieur à la taille des particules. Dans ce cas les éléments liquides et solides passent au travers de la surface filtrante.
Si le diamètre des pores de la surface filtrante est inférieur à la taille des particules, le filtre se comporte comme un filtre conventionnel et se trouve rapidement colmaté.
Ce cas ne présente pas réellement d'intérêt puisqu'aucune séparation n'est obtenue.
<u>2ème cas</u> : $F_s > F_1 > F_p$
Ce cas ne présente pas non plus d'intérêt, puisque dans ces conditions ni les particules, ni le liquide ne passent au travers du filtre.
<u>3ème cas</u> : $F_s > F_p > F_1$
Dans ce cas, seul le liquide peut passer au travers du filtre les particules sont, par la force centrifuge, éloignées de la surface de filtration.

Un tel mode opératoire peut être utilisé lorsque l'on souhaite réaliser un lavage des particules d'une suspension.

Une application intéressante d'un tel dispositif est la séparation de particules à l'intérieur d'une suspension. On supposera, pour faciliter les explications, que le liquide contient des particules de même densité mais de tailles différentes. (Le raisonnement serait le même pour des particules de même taille mais de densités différentes).

Considérons une suspension présentant une courbe de distribution granulométrique donnée avec une taille de particules comprise entre $S_m$ et $S_g$. Supposons que dans cette suspension, on veuille isoler toutes les particules dont la taille est comprise entre $S_i$ et $S_j$ avec

$$S_m \leq S_i < S_j \leq S_g.$$

Pour obtenir ce résultat, deux modes opératoires sont possibles. Selon un premier mode opératoire, on ajuste la vitesse du filtre rotatif de telle sorte que l'on ait :

$$F_{sg} > F_p > F_{sj} > F_{si} > F_{sm} > F_1$$

En réalité, on a $F_p = F_{sj} + \varepsilon$ ($\varepsilon$ étant aussi petit que possible).

On fait circuler la suspension sur la partie externe de la paroi du cylindre, jusqu'à ce que l'on ait atteint le niveau de séparation souhaité. Dans ces conditions seules les particules dont la taille est inférieure ou égale à $S_j$ passent au travers du filtre.

On récupère alors le produit de filtration et on le remet en circulation après avoir ajusté la vitesse du cylindre de telle sorte que l'on ait :

$$F_{sj} > F_{si} > F_p > F_{sm} > F_1$$

En réalité, on a $F_{si} = F_p + \varepsilon$ ($\varepsilon$ étant aussi petit que possible).

Seules les particules dont la taille est inférieure à $S_i$ passent au travers du filtre, le volume non filtré obtenu ne contenant alors que des particules dont la taille est comprise entre $S_i$ et $S_j$.

Selon le second mode opératoire, on ajuste la vitesse du filtre rotatif de telle sorte que l'on ait :

$$F_{sg} > F_{sj} > F_{si} > F_p > F_{sm} > F_1$$

En réalité, on a $F_{si} = F_p + \varepsilon$ ($\varepsilon$ étant aussi petit que possible).

On fait circuler la suspension sur la partie externe de la paroi du cylindre rotatif jusqu'à ce que l'on ait atteint le niveau de séparation souhaité. Seules les particules dont la taille est inférieure à $S_i$ passent au travers du filtre. Le volume non filtré ne contient que des particules dont la taille est supérieure ou égale à $S_i$. On évacue le produit de filtration et on remet en circulation le volume non filtré en ajustant la vitesse de rotation du filtre rotatif de telle sorte que l'on ait :

$$F_{sg} > F_p > F_{sj} > F_{si}$$

En réalité, on a $F_p = F_{sj} + \varepsilon$ ($\varepsilon$ étant aussi petit que possible).

Seules les particules dont la taille est inférieure ou égale à $S_j$ passent au travers du filtre. Le produit de filtration ne contient alors que des particules dont la taille est comprise entre $S_i$ et $S_j$.

Divers matériaux peuvent être utilisés pour la réalisation de la surface de filtration. A titre d'exemple, il peut s'agir d'inox fritté, de plastique tel que le polypropylène, de céramique ou d'une toile métallique.

Selon un mode de réalisation particulier, on utilise le présent dispositif pour effectuer une séparation des constituants solides en fonction de leur forme géométrique. Pour cela, on peut réaliser un filtre dont la forme des pores est choisie en fonction de la forme des particules que l'on souhaite séparer. On pourra à titre d'exemple réaliser un cylindre dont les "pores" sont constitués de fentes disposées sur la surface du cylindre de manière appropriée.

Cette séparation des grains de formes différentes se produit également lorsque les grains sont de même masse. Pour expliquer cela, on doit prendre en considération un facteur qui intervient de façon négligeable, comparé à la masse, lorsque les grains ont des masses différentes. En effet, dans un milieu tel que, par exemple, un milieu gélatineux, on observe que des grains de formes différentes ont des comportements différents. En réalité dans un milieu tourbillonnaire le volume hydrodynamique de grains ayant une forme donnée (par exemple des grains 3D) sera différent du volume hydrodynamique de grains ayant une autre forme (par exemple des grains plats), le volume hydrodynamique correspondant au volume de liquide mis en mouvement par un grain lors de son déplacement dans un milieu donné. Les forces liées à ce facteur hydrodynamique et qui correspondent à des forces de résistance du milieu dans lequel sont placés les grains agissent dans le même sens que les forces centrifuges. Ces différences de volume hydrodynamique expliquent la séparation qui intervient entre des grains ayant des masses identiques mais des formes différentes.

La taille des pores n'est pas un paramètre critique. Selon l'invention des essais satisfaisants ont été réalisés avec des seuils de coupure allant jusqu'à 20 μm, permettant avec une vitesse de rotation appropriée d'arrêter des particules de taille de l'ordre de 0,1 μm ou moins en ajustant la vitesse de rotation de manière appropriée. Quant à la taille maximale des pores du filtre, celle-ci est tout de même limitée par le fait que l'on doit pouvoir réaliser la montée en pression nécessaire. De plus, avec des pores de taille plus importante, on se trouve confronté avec des problèmes de rugosité de surface. L'avantage d'avoir un filtre dont les plus petits pores sont de taille supérieure à celle des plus grosses particules à filtrer, réside dans le fait que l'on évite totalement les problèmes de colmatage de la surface filtrante.

Exemple 1

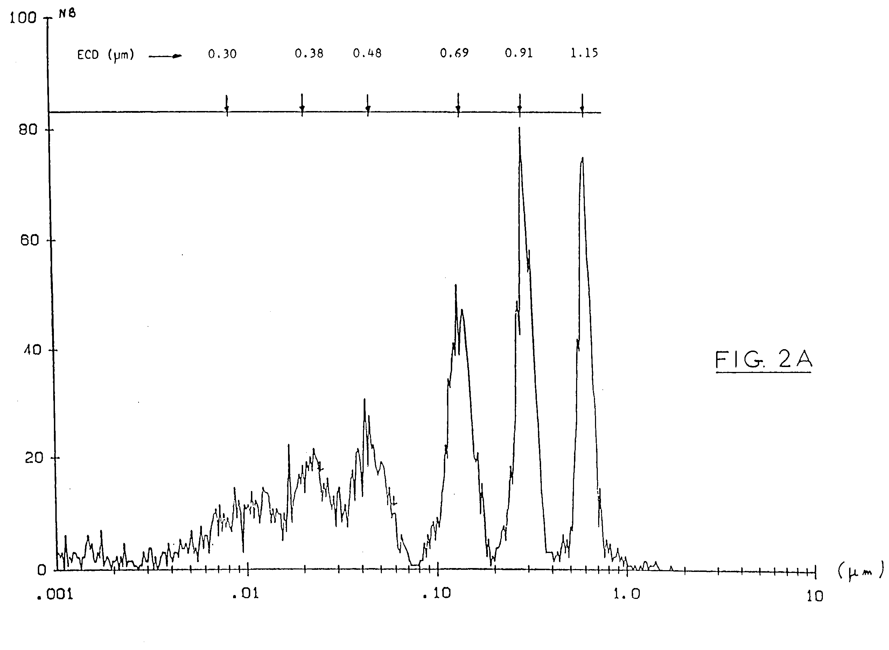

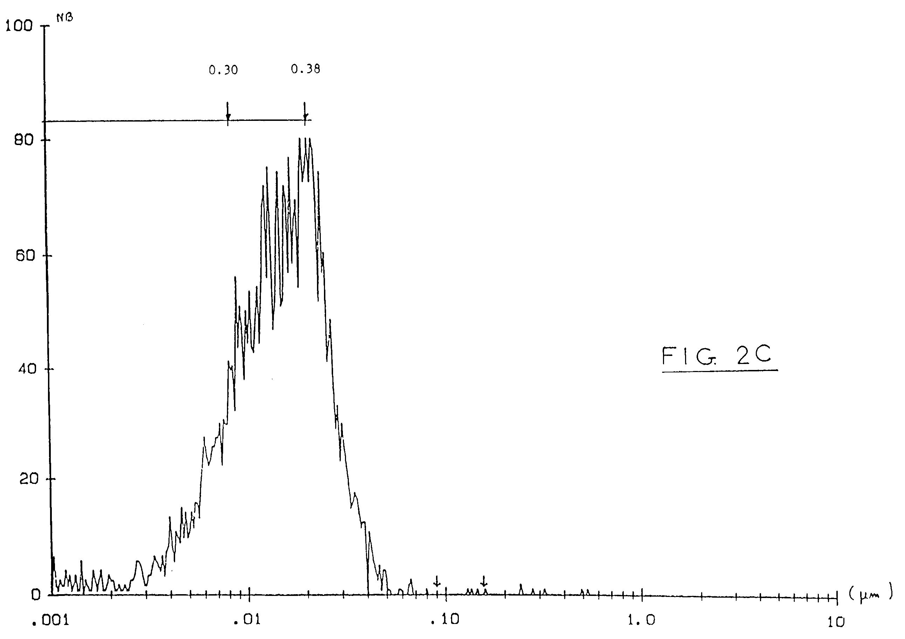

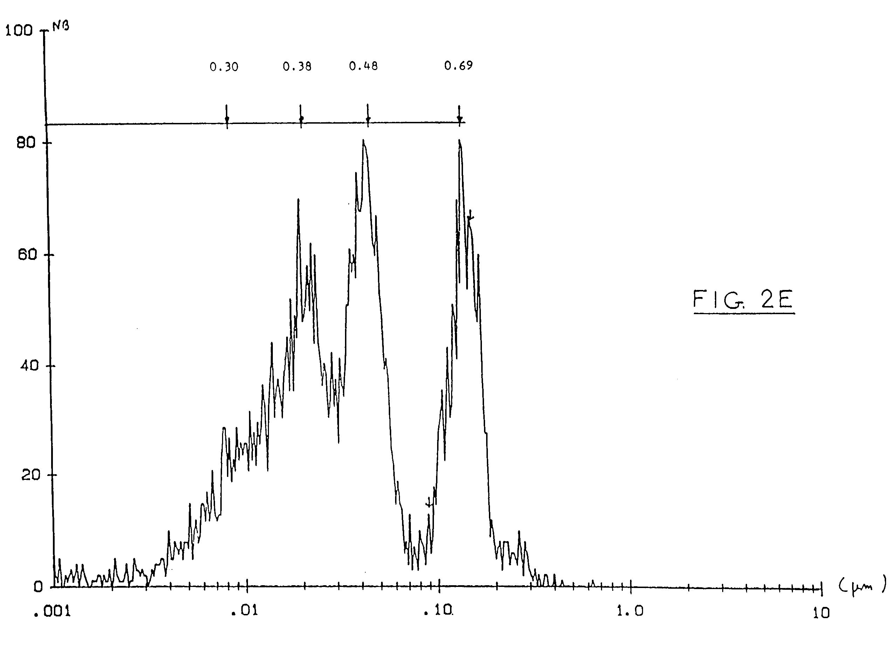

Une émulsion comprenant six émulsions homodisperses est introduite dans le dispositif de filtration. La courbe obtenue par analyse granulométrique électrolytique (EGA) (basée sur la mesure du courant nécessaire pour réduire les grains présents dans l'émulsion) de l'émulsion originale, montrant la courbe de distribution de taille des grains est représentée en Fig. 2A. La courbe présente six maximums (normés à 80), correspondant aux six tailles de grains différentes : 0,30 μm ; 0,38 μm ; 0,48 μm ; 0,69 μm ; 0,91 μm ; 1,15 μm. Le graphique représente en réalité le pourcentage de grains de chaque taille par classe de volume des grains. Le nombre de grains de chaque taille dans le mélange est sensiblement le même, mais ceci n'apparaît pas de manière évidente sur le graphique en raison de l'échelle logarithmique qui écrase les maximums relatifs aux grains de plus faible volume.

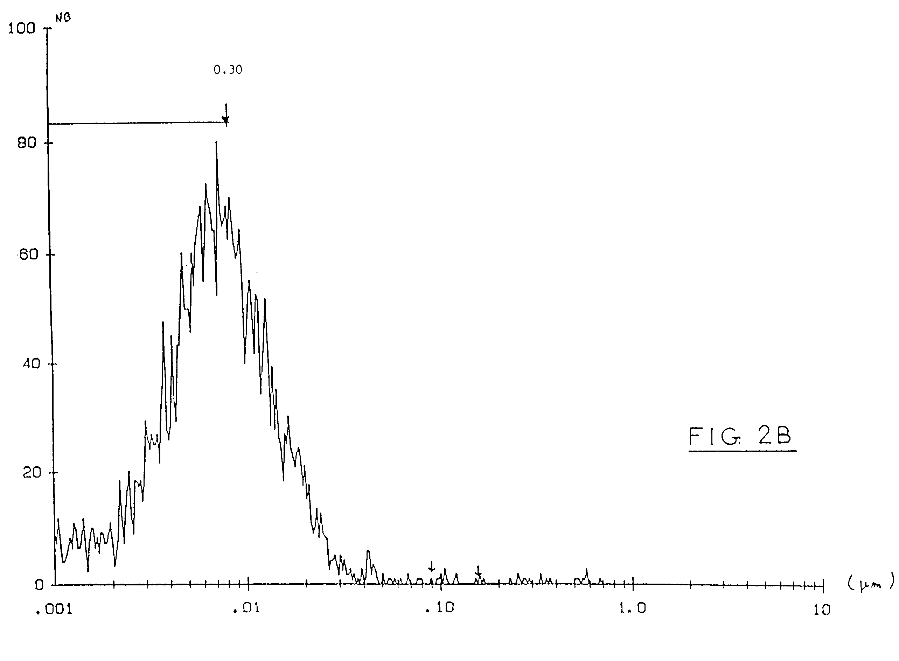

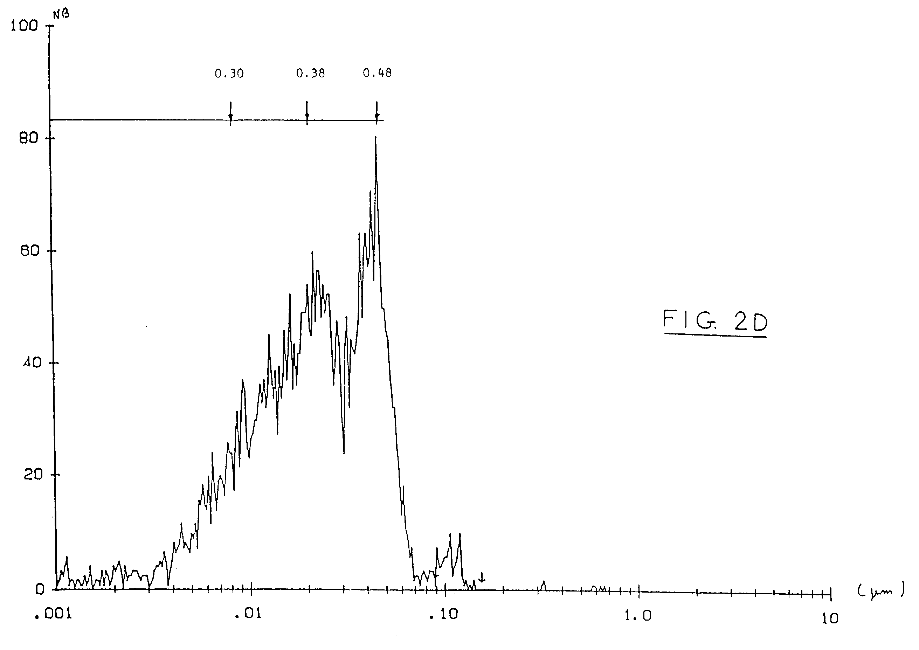

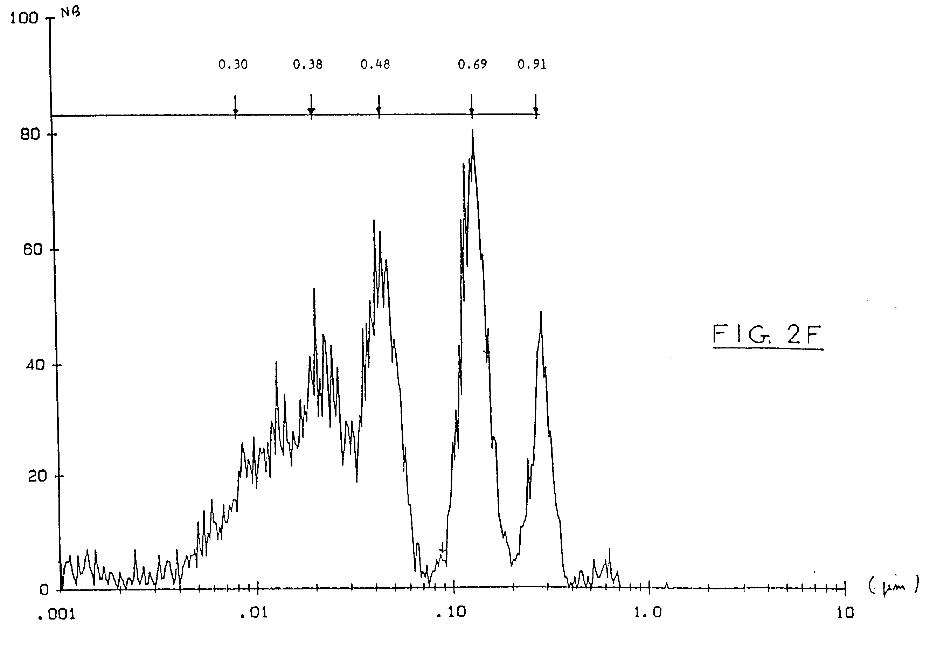

Afin de séparer l'émulsion présentant un maximum à 0,30 μm, on ajuste la vitesse de rotation du filtre à 2330 tours/mn. L'EGA du filtrat est représenté à la Fig. 2B. On diminue ensuite la vitesse de rotation de filtre à 2095 tours/mn de manière à éliminer l'émulsion présentant un maximum à 0,38 μm. Le filtrat dont l'EGA est représenté à la Fig. 2C contient alors un mélange de grains à 0,30 μm et à 0,38 μm. On diminue à nouveau la vitesse de rotation du filtre à 1850 tours/mn de façon à séparer l'émulsion présentant un maximum à 0,48 μm. Le filtrat dont l'EGA est représenté à la Fig. 2D contient alors un mélange de grains à 0,30 μm, à 0,38 μm et à 0,48 μm. On diminue alors la vitesse de rotation à 1270 tours/mn pour séparer l'émulsion présentant un maximum à 0,69 μm. Le filtrat dont l'EGA est représenté à la Fig. 2E contient alors un mélange de grains à 0,30 μm, 0,38 μm, 0,48 μm et 0,69 μm. On diminue enfin la vitesse de rotation du filtre à 850 tours/mn de façon à séparer l'émulsion présentant un maximum à 0,91 μm. Le filtrat dont l'EGA est représenté à la Fig. 2F contient alors un mélange de grains à 0,30 μm, 0,38 μm, 0,48 μm, 0,69 μm et 0,91 μm.

Ainsi qu'il apparaît dans les figures correspondantes, selon le mode opératoire du présent exemple, on n'attend pas la filtration totale avant de réduire les vitesses de rotation du filtre.

Si l'on abaisse encore la vitesse de rotation du filtre, on retrouve dans le filtrat le mélange original des six émulsions différentes.

Exemple 2

Une émulsion comprenant des grains tabulaires et des grains en trois dimensions est introduit dans le dispositif selon la présente invention.

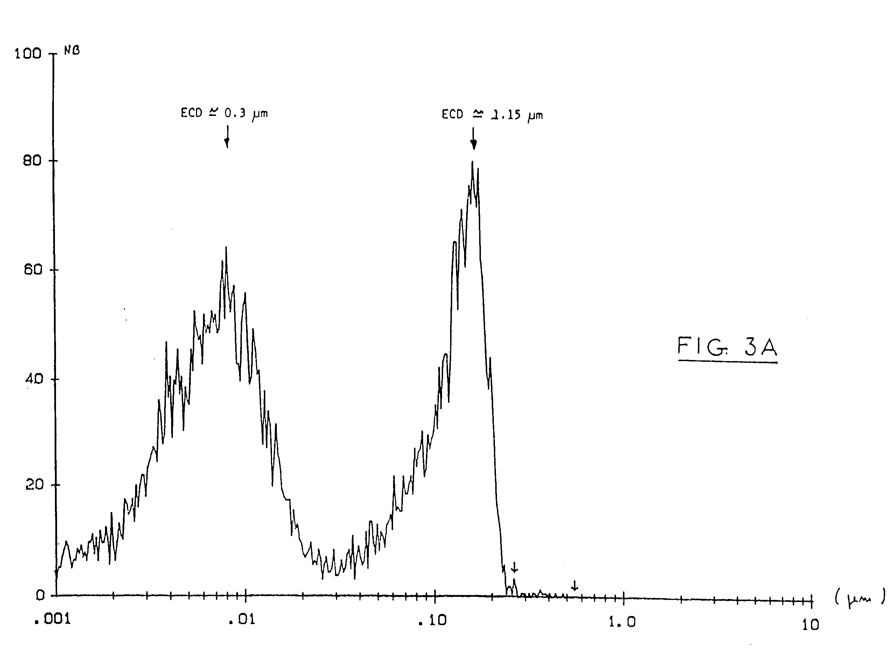

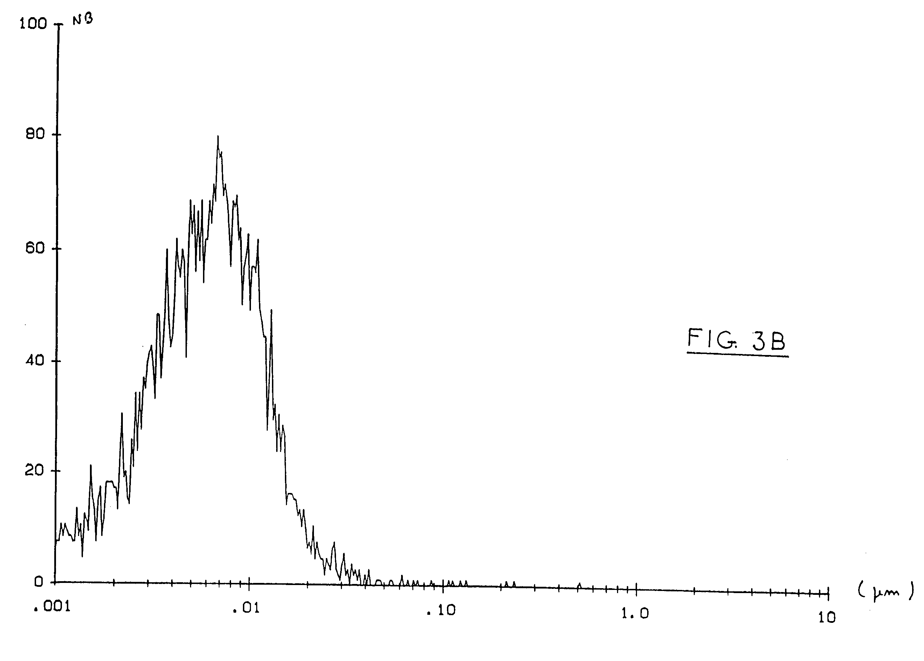

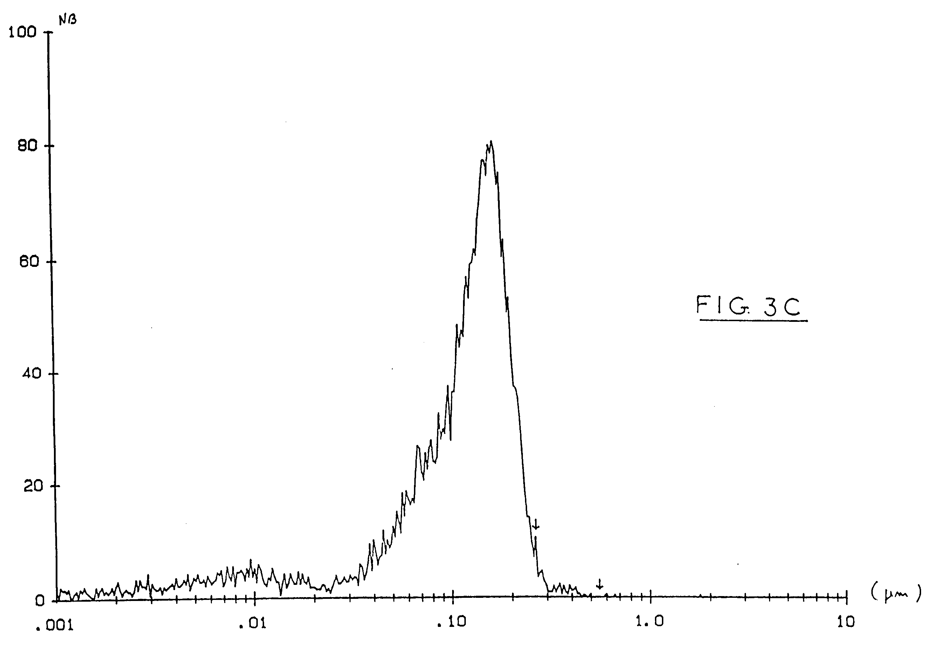

La distribution de tailles de grains de l'émulsion originale est représentée à la Fig. 3A. L'EGA présente deux maximums ; l'un relatif aux grains-3D à 0,30 μm et l'autre relatif aux grains plats à 1,15 μm. Le filtre est entraîné en rotation à 2260 tours/mn. La Fig. 3B représente l'EGA du produit de filtration ne contenant que des grains-3D.

Le produit non filtré dont l'EGA est représenté en Fig. 3C ne contient sensiblement que des grains tabulaires.

Il est à noter que, comparés au premier exemple, les maximums à 0,30 μm et à 1,15 μm ne coïncident pas exactement sur l'axe des abscisses. Ceci est dû au fait que cet axe est représentatif des volumes et que les valeurs 0,30 et 1,15 μm sont ici relatives aux diamètres équivalents. Un cristal plat de 1,15 μm de diamètre équivalent à un volume plus petit qu'une sphère de même diamètre. La valeur du décalage dépend de l'épaisseur du cristal.

**Revendications**

1. Procède de séparation de constituants solides de tailles et/ou de formes différentes, contenus dans une suspension au moyen d'un dispositif comportant un cylindre filtrant creux dont la paroi est constituée d'un matériau poreux, la pression interne duit cylindre étant $P_i$ et, une enceinte cylindrique stationnaire entourant ledit cylindre creux et disposée de manière à ce que les parois de ladite enceinte cylindrique définissent avec ledit cylindre filtrant une zone de circulation à l'intérieur de laquelle la pression est $P_e > P_i$, ledit procédé comprenant les étapes suivantes :

1) entraîner en rotation continue ledit cylindre filtrant creux ;
2) faire circuler la suspension sur la partie externe de la paroi du cylindre filtrant, jusqu'à ce que l'on ait atteint le niveau de séparation souhaité, ladite enceinte stationnaire comportant deux orifices, un premier orifice permettant l'introduction de la suspension à filtrer, un second permettant l'évacuation du volume non filtré avant d'être recyclé par ledit premier orifice ;
3) évacuer le produit de filtration de la zone interne du cylindre filtrant par l'intermédiaire d'un orifice approprié ;

ledit procédé étant caractérisé en ce que, au cours du processus de séparation, on modifie la surface efficace des pores dudit cylindre en modifiant la vitesse de rotation dudit cylindre filtrant, et en ce que ladite vitesse de rotation du cylindre filtrant, les pressions respectives $P_e$ et $P_i$, ainsi que les rayons respectifs du cylindre et de l'enceinte cylindrique stationnaire sont ajustés de manière à ce que la suspension forme sur la partie externe de la paroi du cylindre filtrant, un écoulement sous forme de cellules de Taylor.

2. Procédé de séparation selon la revendication 1, caractérisé en ce que la vitesse de rotation dudit cylindre filtrant varie entre 0 et 10 000 tours/m.

3. Procédé de séparation selon la revendication 1, caractérisé en ce que la largeur dudit espace compris entre la paroi filtrante du cylindre filtrant et la paroi interne de l'enceinte cylindrique varie entre 1 mm et 50 mm.

4. Procédé de séparation selon l'une quelconque des revendications 1 à 3, caractérisé en ce que $P_e - P_i$ varie entre $10^3$ et $10^6$ Pa.

5. Procédé de séparation selon la revendication 1, caractérisé en ce que le seuil de coupure du cylindre rotatif filtrant est supérieur à la taille des plus gros constituants solides de la suspension.

6. Procédé de séparation selon la revendication 1, caractérisé en ce que la paroi du cylindre rotatif est constituée d'un métal fritté.

7. Procédé de séparation selon la revendication 6, caractérisé en ce que la paroi du cylindre rotatif est réalisée en acier fritté inoxydable.

8. Procédé de séparation selon la revendication 1, caractérisé en ce que la paroi du cylindre rotatif est constituée à partir d'un matériau céramique.

9. Procédé de séparation selon la revendication 1, caractérisé en ce que la paroi du cylindre rotatif est constituée à partir d'un matériau plastique.

**Claims**

1. Method for separating solid constituents having different sizes contained in a suspension by means of a device including a hollow filtering cylinder, the wall of which is formed of a porous material, the inner pressure of said cylinder being Pi and, a stationary cylindrical housing surrounding said hollow cylinder and arranged so that the walls of said cylindrical housing define with the filtering cylinder a circulating gap in which the pressure Pe > Pi, said method including the following steps :

1) driving into continuous rotation said hollow filtering cylinder,
2) circulating the suspension on the outer portion of the filtering cylinder wall, until reaching the desired separation level, said stationary housing including two orifices, a first one allowing to introduce the suspension to be filtered, a second one allowing to discharge the unfiltered volume before being recycled by said first orifice ;
3) discharging the filtrate from the inner zone of the filtering cylinder by means of an appropriate orifice said method being characterized in that the pore effective area of said cylinder is modified by modifying the rotation speed of said filtering cylinder and in that the rotation speed of the filtering device, the respective pressures Pe and Pi, the respective radii of the cylinder and of the stationary housing are adjusted so that said suspension forms on the outer portion of the filtering cylinder wall a Taylor vortex flow.

2. Separation method according to claim 1, characterized in that the rotation speed of said filtering cylinder varies between 0 and 10000 rpm.

3. Separation method according to claim 1 characterized in that the width of said gap between the filtering wall of the filtering cylinder and the inner wall of the cylindrical housing varies between 1 mm and 50 mm.

4. Separation method according to claims 1 to 3, characterized in that Pe - Pi varies between $10^3$ and $10^6$ Pa.

5. Separation method according to claim 1, characterized in that the cutting threshold of the filtering rotating cylinder is higher than the size of the biggest solid constituents in the suspension.

6. Separation method according to claim 1, characterized in that the rotating cylinder wall is formed of a sintered metal.

7. Separation method according to claim 3, characterized in that the rotating cylinder wall is formed of sintered stainless steel.

8. Separation method according to claim 1, characterized in that the rotating cylinder wall is formed of ceramic.

9. Separation method according to claim 1, characterized in that the rotating cylinder wall is formed of plastic.

**Patentansprüche**

1. Verfahren zum Abtrennen von in einer Suspension enthaltenen Feststoffen unterschiedlicher Größe mittels einer Vorrichtung aus einem Hohlzylinder zum Filtrieren, dessen Wandung aus porösem Material besteht und dessen Innendruck Pi ist, und einem stationären, zylinderförmigen Gehäuse, das den Hohlzylinder umgibt und so angeordnet ist, daß seine Wände mit dem Filtrierzylinder einen Zirkulationsspalt bilden, in dem der Druck Pe > Pi ist, wobei das Verfahren folgende Schritte aufweist:

    1) Versetzen des Hohlzylinders in kontinuierliche Rotation;

    2) Zirkulieren der Suspension an der Außenfläche der Filterwandung des Zylinders, bis der erwünschte Trennpegel erreicht ist, wobei das stationäre Gehäuse zwei Öffnungen aufweist, von denen die erste die Zuführung der zu filternden Suspension und die zweite das Ablassen des ungefilterten Anteils vor Rückführung durch die erste Öffnung ermöglicht; und

    3) Ablassen des Filtrats aus dem inneren Bereich des Filtrierzylinders mittels einer passenden Öffnung;

dadurch gekennzeichnet, daß die Wirkfläche der Poren des Filtrierzylinders durch Änderung der Rotationsgeschwindigkeit des Zylinders verändert wird, und daß die Rotationsgeschwindigkeit der Filtriervorrichtung, der jeweilige Druck Pe bzw. Pi und der jeweilige Radius des Zylinders bzw. des stationären Gehäuses so eingestellt werden, daß die Suspension an der Außenfläche der Filterwandung des Zylinders eine Taylor-Wirbelströmung bildet.

2. Verfahren nach Anspruch 1, dadurch gekennzeichnet, daß die Rotationsgeschwindigkeit des Filtrierzylinders zwischen O und 10000 U/min variiert.

3. Verfahren nach Anspruch 1, dadurch gekennzeichnet, daß die Breite des Spalts zwischen der Filterwandung des Zylinders und der Innenwand des zylindrischen Gehäuses zwischen 1mm und 50mm variiert.

4. Verfahren nach den Ansprüchen 1 - 3, dadurch gekennzeichnet, daß die Druckdifferenz Pe - Pi zwischen $10^3$ Pa und $10^6$ Pa variiert.

5. Verfahren nach Anspruch 1, dadurch gekennzeichnet, daß der Trennpegel des Zylinders höher als die Abmessung der größten Feststoffe der Suspension ist.

6. Verfahren nach Anspruch 1, dadurch gekennzeichnet, daß die Wandung des Zylinders aus gesintertem Metall besteht.

7. Verfahren nach Anspruch 3, dadurch gekennzeichnet, daß die Wandung des Zylinders aus gesintertem, rostfreiem Stahl besteht.

8. Verfahren nach Anspruch 1, dadurch gekennzeichnet, daß die Wandung des Zylinders aus Keramik besteht.

9. Verfahren nach Anspruch 1, dadurch gekennzeichnet, daß die Wandung des Zylinders aus Kunststoff besteht.

FIG. 1

FIG. 2A

EP 0 558 519 B1

EP 0 558 519 B1

FIG. 2B

FIG. 2C

EP 0 558 519 B1

FIG. 2D

FIG. 2E

FIG. 2F

EP 0 558 519 B1

FIG. 3A

FIG. 3B

EP 0 558 519 B1

FIG. 3C

EP 0 558 519 B1